# FASCICULE DE BREVET EUROPEEN

(11) **EP 3 099 931 B1**
(45) Date de publication et mention de la délivrance du brevet: **11.04.2018**
(21) Numéro de dépôt: 15709733.8
(22) Date de dépôt: 26.01.2015
(51) Int. Cl.: F03G 7/04, F03B 13/18

(54) **SYSTÈME DE STOCKAGE ET GÉNÉRATION D'ÉNERGIE ÉLECTRIQUE POUR MILIEU AQUATIQUE**
SYSTEM ZUR SPEICHERUNG UND ERZEUGUNG VON ELEKTRISCHER ENERGIE AUS EINEM WASSERMEDIUM
SYSTEM FOR STORING AND GENERATING ELECTRIC ENERGY FOR AN AQUATIC MEDIUM

(30) Priorité: 28.01.2014 FR 1400195
(43) Date de publication de la demande: 07.12.2016
(73) Titulaire: Stevens, Christophe, 03140 Charroux (FR)
(72) Inventeur: Stevens, Christophe, 03140 Charroux (FR)
(74) Mandataire: Gabriel, Franck
(86) Numéro de dépôt international: PCT/IB2015/000066
(87) Numéro de publication internationale: WO 2015/114440

(56) Documents cités:
- WO-A1-2012/034104
- WO-A2-2009/114918
- DE-B3-102011 055 524
- US-A1- 2010 107 627

## Description

### DOMAINE TECHNIQUE DE L'INVENTION

La présente invention concerne un système de stockage et génération d'énergie électrique pour milieu aquatique.

### ETAT DE LA TECHNIQUE ANTERIEURE

De nombreux groupes de travail sont actifs sur les problématiques du stockage de l'énergie. Bien que de nombreuses solutions aient déjà été identifiées ou même mises en oeuvre, aucune des solutions actuelles ne présente une véritable rupture permettant de s'approcher des besoins croissants en énergie.

Les enjeux de l'époque moderne concernent les transports, où il est requis de stocker l'énergie électrique en grande quantité afin de remplacer l'énergie d'origine fossile, à la fois polluante et à durée limitée. Ils concernent aussi la consommation électrique domestique et industrielle, provenant en grande partie de centrales de production d'énergie. Dans ce cas, un des problèmes le plus important à résoudre concerne les périodes de pointes, où la consommation atteint des niveaux très élevés, bien que pour des durées relativement limitées. Toutefois, comme il n'est aujourd'hui pas possible de stocker des quantités d'énergie équivalentes à l'écart entre la consommation moyenne et celle de pointe, les centrales doivent être dimensionnées de façon à satisfaire les besoins des niveaux de consommation les plus élevés. Cela représente des investissements très élevés. On trouve par ailleurs de nombreuses centrales d'appoint prévues pour fonctionner en période de pointe. Ces centrales sont souvent à gaz ou au charbon, et représentent des sources de pollution non négligeables. Si le surplus d'énergie requis pour les périodes de consommation de pointe pouvait être stocké pendant les périodes creuses, cela éviterait la construction de ces centrales d'appoint.

La demande de brevet DE10333513 propose un entraînement à fonctionnement discontinu qui est approprié pour toutes les profondeurs d'eau et peut être chargé une fois avec la quantité d'énergie requise. Une machine de travail destinée à être sous l'eau, en particulier, dans la mer, est équipée d'un dispositif de transmission de puissance. Un corps flottant, placé à l'extrémité libre de la corde, doté d'une sphère de flottaison incompressible fermée peut être chargé avec l'énergie de la flottabilité. Au cours de l'abaissement de l'entraînement, l'énergie potentielle est absorbée par l'intermédiaire du corps flottant à l'arrêt et, après le placement de l'entraînement, ladite énergie peut être convertie en un travail mécanique par une libération contrôlée du mécanisme d'encliquetage.

Le document US2010109329 décrit un mécanisme coulissant destiné à produire de l'énergie électrique à partir de l'interaction d'un conducteur avec un certain nombre d'éléments magnétiques sur l'ensemble porteur. L'ensemble porteur se déplace sur l'arbre et, en cas de chute, dans une seconde direction grâce à la force gravitationnelle. Il comporte par ailleurs un mécanisme de ralentissement destiné à ralentir le mouvement de l'ensemble flottant, afin de séparer une surface extérieure de l'ensemble porteur du fluide le long d'au moins une partie de la première ou de la deuxième direction.

Le document JPS569671 décrit un système de conservation et de stockage d'énergie aquatique comprenant un flotteur en appliquant l'action d'une source d'énergie pour couler un flotteur sous l'eau afin de conserver et stocker l'énergie.

Ces trois documents décrivent des systèmes utilisant des flotteurs servant à accumuler de l'énergie potentielle lorsque les flotteurs sont en fond de mer. Ces solutions sont coûteuses et complexes à mettre en oeuvre, en particulier si on souhaite utiliser plusieurs flotteurs qu'il faut accrocher/décrocher en série.

Le document WO2010051630 décrit un système de génération et de stockage d'énergie qui utilise un ballon porteur en suspension dans un fluide et relié par une attache à une bobine. L'attache est tendue et conserve le ballon en hauteur grâce à la poussée d'Archimède. Un moteur permet d'enrouler la bobine de manière à ce que le ballonnet soit tiré vers le bas contre la poussée d'Archimède. L'énergie peut être extraite du système en autorisant le ballonnet à s'élever, en tirant sur l'attache et en tournant la bobine qui est connectée à un générateur.

Ce système, en partie aquatique et en partie au sol, requiert un relief très adapté et ne fonctionne qu'avec un seul flotteur.

Le document DE102006059233 décrit un dispositif de stockage d'énergie pour la génération d'énergie électrique temporaire. Le procédé consiste à immerger un moyen de stockage d'énergie dans un liquide où le corps a une masse spécifique plus faible que celle du liquide.

La demande de brevet DE4135440 décrit une installation de production d'énergie terrestre destinée à fournir de l'énergie dans le réseau électrique en vue de couvrir les périodes de pointe de la consommation d'énergie quotidienne.

Ces documents décrivent des solutions lourdes et complexes à mettre en oeuvre, avec des hauteurs efficaces relativement limitées.

Il existe donc un besoin pour des solutions plus performantes et économiques, respectueuses de l'écosystème.

Le document DE102011055524 décrit un dispositif de stockage d'énergie en mer comportant une pluralité de corps flotteurs stockés en fond de mer. Pour générer de l'énergie, les corps sont libérés du fond et connecté à un générateur. Le générateur est utilisé en tant que moteur pour faire redescendre les corps flotteurs pour une utilisation ultérieure. Pour pallier ces différents inconvénients, l'invention prévoit différents moyens techniques.

### EXPOSE DE L'INVENTION

Tout d'abord, un premier objet de l'invention consiste à prévoir un système de stockage et génération d'énergie électrique permettant de faire face à des pics de consommation d'énergie électrique en alternance avec une consommation faible.

Un autre objet de l'invention consiste à prévoir un système de stockage et génération d'énergie électrique en grande quantité.

Encore un autre objet de l'invention consiste à prévoir un système de stockage et génération d'énergie électrique autonome qui fonctionne à la demande en fonction de pics de consommation.

Un autre objet de l'invention consiste à prévoir une solution qui utilise l'espace disponible, de manière la plus écologique possible, et qui est à l'abri des intempéries.

Pour ce faire, l'invention prévoit un système de stockage et génération d'énergie électrique pour milieu aquatique, comportant :
- une pluralité de poids, chacun coopérant avec au moins un réservoir apte à loger sensiblement hermétiquement une quantité donnée d'air et/ou d'eau et d'un moyen de préhension ;
- un ascenseur-générateur, agencé en coopération avec les poids et disposé pour permettre, en mode générateur, la descente en zone de fond desdits poids, et, en mode moteur, de remonter vers la surface lesdits poids ;
- un flotteur principal, apte à supporter à la surface la portion supérieure de l'ascenseur-générateur ;
- un moteur-réversible, coopérant avec l'ascenseur-générateur et permettant, en mode générateur, la production d'énergie électrique grâce à l'action des poids lors de leur descente, et, en mode moteur, l'actionnement de l'ascenseur-générateur pour effectuer une remontée des poids.

Selon une telle architecture, l'invention propose une solution à la demande qui permet de gérer les pics de consommation électrique tout comme les périodes plus creuses. Les réservoirs peuvent être internes ou externes aux poids.

Selon un mode de réalisation avantageux, le système possède un moteur réversible, porté par le flotteur principal, qui coopère avec la portion supérieure de l'ascenseur-générateur.

Selon un autre mode de réalisation avantageux, l'ascenseur-générateur est constitué par un ensemble de poulies actionnant une courroie entre le flotteur principal et le fond.

Selon un autre mode de réalisation avantageux, l'ensemble de poulies comporte une poulie de surface portée par le flotteur principal et une poulie de fond.

Selon un autre mode de réalisation avantageux, la poulie de surface coopère mécaniquement avec le moteur réversible par l'entremise d'une transmission.

Selon un autre mode de réalisation avantageux, l'ascenseur-générateur est constitué par un treuil porté par le flotteur principal, un câble de treuil et au moins un crochet.

De manière avantageuse, le treuil coopère mécaniquement avec le moteur réversible par l'entremise d'une transmission.

Egalement de manière avantageuse, les poids sont de forme sensiblement allongée avec le réservoir agencé principalement vers une des extrémités, un flotteur coopérant avec cette même extrémité.

Egalement de manière avantageuse, chacun des poids comporte une commande de gestion des flux fluidiques de la quantité d'air et d'eau du réservoir en coopération fluidique avec l'intérieur du réservoir et l'extérieur du poids.

L'invention prévoit également un procédé de stockage et génération d'énergie électrique pour milieu aquatique, comportant les étapes consistant à :
- en mode générateur, assurer la descente en zone de fond d'une pluralité de poids à l'aide d'un ascenseur-générateur reliant un flotteur principal sensiblement en surface à une zone de fond, de sorte que la force exercée par les poids permette à l'ascenseur-générateur d'actionner un moteur réversible en mode de production d'énergie électrique ; et
- en mode moteur, de remonter vers la surface, à l'aide de l'ascenseur-générateur, lesdits poids, le moteur-réversible étant alors en mode moteur et assurant la motricité de l'ascenseur-générateur.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1 est une représentation schématique d'un premier exemple de réalisation d'un système de stockage et génération d'énergie en milieu aquatique selon l'invention mis en oeuvre par un système de poulies ;
- la figure 2 est une représentation schématique d'un second exemple de réalisation d'un système de stockage et génération d'énergie en milieu aquatique selon l'invention mis en oeuvre par un treuil ;
- la figure 3 est une coupe en élévation d'un exemple de poids pour système de stockage et génération d'énergie en milieu aquatique selon l'invention ;
- la figure 4 illustre un autre mode de réalisation du système de stockage et génération d'énergie de la figure 1 ;
- la figure 5 illustre l'ensemble poids-réservoir du système de stockage et de génération d'énergie de la figure 4.

### DESCRIPTION DETAILLEE DE L'INVENTION

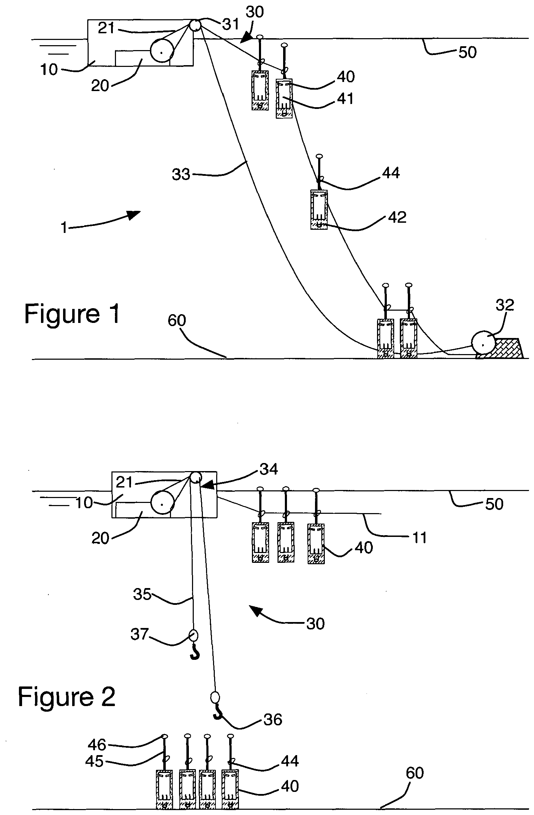

La figure 1 illustre un premier mode de réalisation d'un système de stockage de l'énergie électrique pour milieu marin selon l'invention dans lequel l'énergie potentielle est stockée au moyen d'une pluralité de poids 40, qui, lors de leur descente vers le fond 60 de l'eau, actionnent un générateur afin de produire de l'énergie électrique. Cette énergie est avantageusement produite lors de périodes de grande consommation d'un réseau principal relié au système de l'invention, afin de soulager le réseau principal de production d'énergie.

Le système comporte avantageusement un grand nombre de poids 40, permettant ainsi de générer de l'énergie de façon répétée (ou continue), de façon durable.

Le système illustré comporte un flotteur principal 10, adapté pour loger, sensiblement en surface du milieu aquatique concerné, un ou plusieurs moteurs réversibles 20. Le flotteur principal 10 sert également de support pour maintenir sensiblement à la surface ou sous la surface de l'eau la portion supérieure d'un ascenseur-générateur 30 décrit ci-après.

L'ascenseur-générateur 30 consiste en un dispositif destiné à déplacer un ou plusieurs poids 40 vers le fond ou vers la surface de l'eau. Une transmission 21 permet de relier l'ascenseur-générateur 30 au moteur réversible 20. Chacun des poids 40 dispose d'un réservoir 41 destiné à loger une quantité d'air et/ou d'eau susceptible de compenser ou d'augmenter au moins partiellement la charge du poids 40, afin soit d'assurer le stockage en position sensiblement en surface de l'eau, ou au contraire pour favoriser la descente vers le fond.

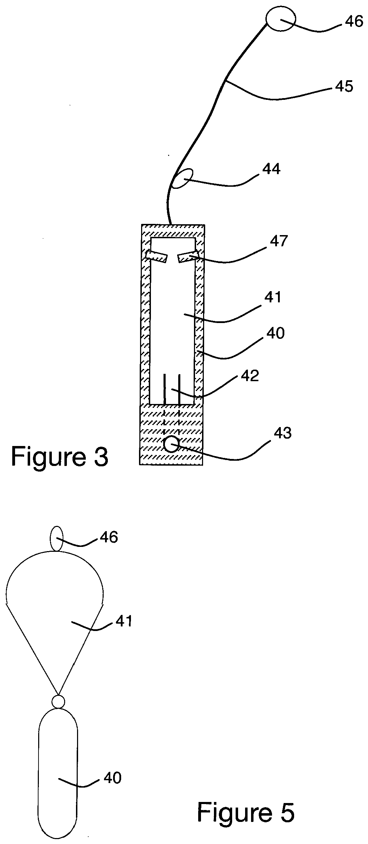

Selon ce premier mode de réalisation, le réservoir 41 est agencé à l'intérieur du poids 40. L'agencement détaillé est décrit plus en détail en relation avec la figure 3.

Dans le premier mode de réalisation illustré à la figure 1, l'ascenseur-générateur 30 comprend un ensemble de poulies assurant le déplacement en rotation d'une courroie 33 ou d'un câble coopérant avec les poulies. Dans cet exemple, une poulie de surface 31 porte la partie haute de l'ascenseur-générateur 30 et une poulie de fond 32 assure le maintien de la courroie vers le fond 60 ou au fond de l'eau. La transmission 21 assure la liaison mécanique entre la poulie de surface 31 et le moteur réversible 20.

En mode de production d'énergie électrique, les poids 40 descendent un à un vers le fond 60, guidés par l'ascenseur-générateur 30 qui opère alors en mode générateur. L'énergie produite par le moteur réversible 20 est envoyée par câble à destination d'un site de consommation situé par exemple sur une rive voisine (non montré sur les figures). Lorsque tous les poids 40 sont au fond 60, le système cesse de générer de l'énergie. Lorsqu'une période de sous-consommation d'électricité se présente, l'ascenseur-générateur 30 peut être utilisé en mode moteur, pour remonter les poids 40 vers la surface 50, en position de stockage. L'énergie nécessaire provient d'un site de production relié électriquement au système. Les poids 40 remontés peuvent rester en position de stockage aussi longtemps que nécessaire, jusqu'à une nouvelle période de forte consommation au niveau du réseau principal relié, afin de soulager les centrales de ce réseau pour affronter les périodes de pointes de consommation.

La figure 2 illustre une variante de réalisation du système de la figure 1, dans lequel l'ascenseur-générateur 30 comprend un treuil 34 prévu au niveau du flotteur principal 10, et relié au moteur-générateur 20 par la transmission 21. Le treuil 34 sert à actionner un câble de treuil 35 pourvu de crochets (deux crochets 36 dans cet exemple).

Un flotteur de crochet 37 peut être positionné à proximité du crochet 36 pour favoriser son bon positionnement en regard des moyens de préhension 44 des poids 40, et ainsi faciliter les opérations d'accrochage et décrochage des poids 40. Des flotteurs 46 de poids, de préférence isochores, sont reliés aux poids 40 par les câbles de poids 45, servant également à relier les poids 40 aux moyens de préhension 44 (sous forme de boucles dans cet exemple).

La figure 3 montre une vue en coupe d'un exemple de poids 40 selon ce premier mode de réalisation. Le poids 40 est avantageusement en forme de cylindre ou rectangle allongé, pourvu d'un réservoir 41 interne en partie haute. Une commande de flux fluidique 42 gère les entrées et/ou sorties de fluides dans le réservoir 41 pour commander les déplacements des poids 40. La commande 42 laisse entrer une certaine quantité d'eau pour amorcer la descente des poids 40 vers le fond. En remontée, la commande 42 laisse sortir l'eau, pour favoriser la flottaison du poids 40 et son stockage en zone de surface. La commande 42 est commandée soit de façon automatique par le système de stockage et génération et/ou à distance, par un opérateur manuel ou automatique situé à distance. En variante, la descente peut également être amorcée en déplaçant le poids 40 vers le fond.

Un canal d'entrée/sortie 43 de réservoir 41 permet les échanges fluidiques entre le réservoir 41 et l'extérieur. Dans l'exemple illustré, les poids 40 comportent en plus des volets 47 de rétention d'air, permettant d'éviter les fuites d'air si le réservoir 41 si trouve malencontreusement en position inclinée.

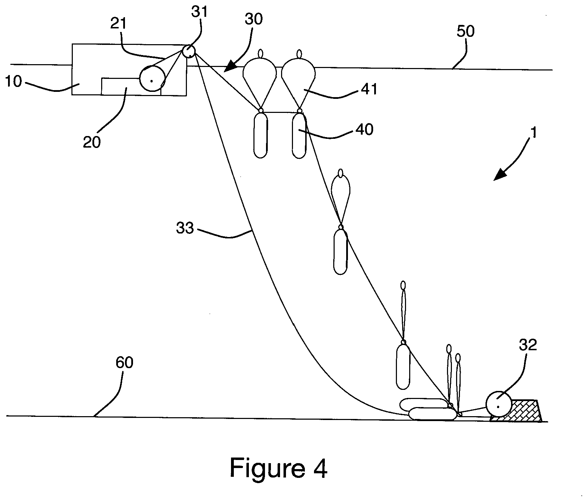

Les figures 4 et 5 illustrent un deuxième mode de réalisation de l'invention. Selon ce deuxième mode de réalisation, les poids 40 sont massifs et reliés à des réservoirs 41 externes gonflables. Un flotteur 46 supérieur (similaire à celui des figures 1 à 3) complète l'ensemble. La figure 5 illustre un poids 40 relié à un réservoir 41 externe. Le réservoir 41 externe comprend une enveloppe souple remplie d'air. Plusieurs types de matériaux souples peuvent être utilisés pour réaliser l'enveloppe du réservoir. Un matériau polymère est préférentiellement utilisé. En mode gonflé, le réservoir 41 est dimensionné de façon à faire flotter le poids 40 à la surface 50 de l'eau. En mode dégonflé, le réservoir 41 perd son effet de flottaison et le poids 40 se retrouve au fond 60. La figure 4 illustre ces deux modes, ainsi que la phase transitoire de dégonflage et descente vers le fond.

Comme dans le mode de réalisation précédent, la descente des poids 40 vers le fond 60 entraîne l'ascenseur-générateur 30 qui opère alors en mode générateur, permettant ainsi de générer de l'énergie.

Les Figures et leurs descriptions faites ci-dessus illustrent l'invention plutôt qu'elles ne la limitent. En particulier, l'invention et ses différentes variantes viennent d'être décrites en relation avec un exemple particulier comportant des poids avec un réservoir simple.

Le flotteur supérieur peut être constitué d'un ensemble de flotteurs afin de faciliter le transport et l'assemblage, afin d'avoir une certaine flexibilité dans le dimensionnement (industrialisation) et afin d'accompagner de façon plus souple la forme de la surface de la mer en cas de tempête.

Il y a au moins une courroie 33 ou chaîne avec deux poulies afin d'assurer une tension permanente entre les deux poulies mais il peut aussi y avoir plusieurs chaînes ou courroies et plusieurs poulies.

Le moteur peut tenir lieu de générateur et inversement selon le mode de fonctionnement. On peut aussi prévoir deux éléments séparés.

La puissance du dispositif de régulation d'énergie peut être modulée en faisant varier la vitesse de la chaîne/courroie ou en faisant varier le nombre et la masse des poids 40 accrochés.

Les signes de références dans les revendications n'ont aucun caractère limitatif. Les verbes "comprendre" et "comporter" n'excluent pas la présence d'autres éléments que ceux listés dans les revendications.

### Numéros de référence employés sur les figures

- 10: Flotteur principal
- 20: Moteur réversible
- 21: Transmission
- 30: Ascenseur-générateur
- 31: Poulie de surface
- 32: Poulie de fond
- 33: Courroie
- 34: Treuil
- 35: Câble de treuil
- 36: Crochets
- 37: Flotteur de crochets
- 40: Poids
- 41: Réservoir
- 42: Commande de flux fluidique
- 43: Canal d'entrée/sortie
- 44: Moyens de préhension
- 45: Câble de poids
- 46: Flotteur
- 47: Volets de rétention d'air
- 50: Surface de l'eau
- 60: Zone de fond de l'eau

## Revendications

1. Système de stockage et génération d'énergie électrique pour milieu aquatique, comportant :
- une pluralité de poids (40);
- un ascenseur-générateur (30);
- un flotteur principal (10), apte à supporter à la surface la portion supérieure de l'ascenseur-générateur (30) ;
**caractérisé en ce que**:
- l'ascenseur-générateur (30) est agencé en coopération avec les poids (40) et disposé pour permettre, en mode générateur, la descente en zone de fond (60) desdits poids, et, en mode moteur, de remonter vers la surface (50) lesdits poids ;
- un moteur-réversible (20), coopère avec l'ascenseur-générateur (30) et permet, en mode générateur, la production d'énergie électrique grâce à l'action des poids (40) lors de leur descente, et, en mode moteur, l'actionnement de l'ascenseur-générateur (30) pour effectuer une remontée des poids (40) ;
et **en ce que** chacun des poids coopère avec au moins un réservoir (41) apte à loger sensiblement hermétiquement une quantité donnée d'air et/ou d'eau et d'un moyen de préhension (44).

2. Système de stockage et génération d'énergie électrique pour milieu aquatique selon la revendication 1, dans lequel le moteur réversible (20) est porté par le flotteur principal (10) et coopère avec la portion supérieure de l'ascenseur-générateur (30).

3. Système de stockage et génération d'énergie électrique pour milieu aquatique selon l'une des revendications 1 ou 2, dans lequel l'ascenseur-générateur (30) est constitué par un ensemble de poulies (31, 32) actionnant une courroie (33) entre le flotteur principal (10) et le fond (60).

4. Système de stockage et génération d'énergie électrique pour milieu aquatique selon la revendication 3, dans lequel l'ensemble de poulies comporte une poulie de surface (31) portée par le flotteur principal (10) et une poulie de fond (32).

5. Système de stockage et génération d'énergie électrique pour milieu aquatique selon la revendication 4, dans lequel la poulie de surface (31) coopère mécaniquement avec le moteur réversible (20) par l'entremise d'une transmission (21).

6. Système de stockage et génération d'énergie électrique pour milieu aquatique selon l'une des revendications 1 ou 2, dans lequel l'ascenseur-générateur (30) est constitué par un treuil (34) porté par le flotteur principal (10), un câble de treuil (35) et au moins un crochet (36).

7. Système de stockage et génération d'énergie électrique pour milieu aquatique selon la revendication 6, dans lequel le treuil (34) coopère mécaniquement avec le moteur réversible (20) par l'entremise d'une transmission (21).

8. Système de stockage et génération d'énergie électrique pour milieu aquatique selon l'une des revendications précédentes, dans lequel les poids (40) sont de forme sensiblement allongée avec le réservoir (41) agencé principalement vers une des extrémités, un flotteur (46) coopérant avec cette même extrémité.

9. Système de stockage et génération d'énergie électrique pour milieu aquatique selon l'une des revendications précédentes, dans lequel chacun des poids comporte une commande de gestion des flux fluidiques (42) de la quantité d'air et d'eau du réservoir (41) en coopération fluidique avec l'intérieur du réservoir et l'extérieur du poids.

10. Procédé de stockage et génération d'énergie électrique pour milieu aquatique, comportant les étapes consistant à :
- en mode générateur, assurer la descente en zone de fond (60) d'une pluralité de poids (40) à l'aide d'un ascenseur-générateur (30) reliant un flotteur principal (10) sensiblement en surface (50) à une zone de fond (60), de sorte que la force exercée par les poids (40) permette à l'ascenseur-générateur (30) d'actionner un moteur réversible (20) en mode de production d'énergie électrique ; et
- en mode moteur, de remonter vers la surface (50), à l'aide de l'ascenseur-générateur (30), lesdits poids, le moteur-réversible (20) étant alors en mode moteur et assurant la motricité de l'ascenseur-générateur (30).

## Patentansprüche

1. System zur Speicherung und Erzeugung von elektrischer Energie für Wasserumgebung, umfassend:
- eine Vielzahl von Gewichten (40);
- einen Aufzuggenerator (30);
- einen Hauptschwimmer (10), welcher geeignet ist, an der Oberfläche den oberen Teil des Aufzuggenerators (30) zu stützen;
**dadurch gekennzeichnet, dass**
- der Aufzuggenerator (30) zur Zusammenarbeit mit den Gewichten (40) angelegt ist und angeordnet ist, um im Generatorbetrieb den Abstieg der besagten Gewichten in den Bodenbereich (60) zu ermöglichen, und im Motorbetrieb die besagten Gewichte an die Oberfläche ( 50) steigen zu lassen;
- ein Umkehrmotor (20) mit dem Aufzuggenerator (30) zusammenarbeitet und es erlaubt, im Generatorbetrieb elektrische Energie dank der Wirkung der Gewichte (40) während deren Abstieg zu erzeugen und im Motorbetrieb das Betreiben des Lift-Generators (30), um ein Steigen der Gewichte (40) durchzuführen;
und dass jedes der Gewichte jeweils mit mindestens einem Reservoir (41) zusammenarbeitet, angepasst um im Wesentlichen hermetisch eine gegebene Menge an Luft und/oder Wasser aufzunehmen, und einem Greifmittel (44).

2. System zur Speicherung und Erzeugung von elektrischer Energie für Wasserumgebung gemäss Anspruch 1, worin der Umkehrmotor (20) durch den Hauptschwimmer (10) getragen wird und mit dem oberen Teil des Aufzugsgenerators (30) zusammenwirkt.

3. System zur Speicherung und Erzeugung von elektrischer Energie für Wasserumgebung gemäss einem der Ansprüche 1 oder 2, worin der Aufzuggenerator (30) durch einen Satz von Rollen (31, 32) gebildet ist, welche einen Riemen (33) zwischen dem Hauptschwimmer (10) und dem Boden (60) treibt.

4. System zur Speicherung und Erzeugung von elektrischer Energie für Wasserumgebung gemäss Anspruch 3, worin der Satz von Rollen eine durch den Hauptschwimmer (10) getragene Oberflächenscheibe (31) und eine Bodenscheibe (32) umfasst.

5. System zur Speicherung und Erzeugung von elektrischer Energie für Wasserumgebung gemäss Anspruch 4, worin die Oberflächenscheibe (31) mechanisch mit dem Umkehrmotor (20) über ein Getriebe (21) zusammenwirkt.

6. System zur Speicherung und Erzeugung von elektrischer Energie für Wasserumgebung gemäss einem der Ansprüche 1 oder 2, worin der Aufzuggenerator (30) aus einer durch den Hauptschwimmer (10) getragenen Winde (34), einem Windenseil (35) und mindestens einem Haken (36) besteht.

7. System zur Speicherung und Erzeugung von elektrischer Energie für Wasserumgebung gemäss Anspruch 6, worin die Winde (34) mechanisch mit dem Umkehrmotor (20) über ein Getriebe (21) zusammenwirkt.

8. System zur Speicherung und Erzeugung von elektrischer Energie für Wasserumgebung gemäss einem der vorangehenden Ansprüchen, worin die Gewichte im Wesentlichen eine längliche Form aufweisen, wobei das Reservoir (41) hauptsächlich in Richtung eines deren Enden hin angeordnet ist, wobei ein Schwimmer (46) mit diesem gleichen Ende zusammenwirkt.

9. System zur Speicherung und Erzeugung von elektrischer Energie für Wasserumgebung gemäss einem der vorhergehenden Ansprüchen, worin jedes der Gewichte ein Steuerungsmanagement der Fluidströmungen (42) der Menge an Luft und Wasser des Reservoirs (41) in Fluidzusammenarbeit mit dem Innern des Reservoirs und der Aussenseite des Gewichtes umfasst.

10. Verfahren zur Speicherung und Erzeugung von elektrischer Energie für Wasserumgebung, umfassend die folgenden Schritte:
- im Generatorbetrieb, den Abstieg in den Bodenbereich (60) für eine Vielzahl von Gewichten (40) zu gewährleisten, unter Verwendung eines Aufzuggenerators (30), welcher einen Hauptschwimmer (10) im Wesentlichen an der Oberfläche (50) mit einem Bodenbereich (60) verbindet, so dass die durch die Gewichte (40) ausgeübte Kraft es dem Aufzuggenerator (30) erlaubt, einen Umkehrmotor (20) im Generatorbetrieb von elektrischen Energie zu betätigen; und
- im Motorbetrieb, die besagten Gewichte mit Hilfe des Aufzuggenerators (20) wieder an die Oberfläche (50) steigen zu lassen, wobei der Umkehrmotor (20) im Motorbetrieb steht und den Antrieb des Aufzuggenerators (30) gewährleistet.

## Claims

1. System for storing and generating electric energy for aquatic environment, comprising:
- a plurality of weights (40);
- a lift-generator (30);
- a main float (10), adapted to support at the surface the upper portion of the lift-generator (30);
**characterized in that**
- the lift-generator (30) is designed in cooperation with the weights (40) and arranged to allow, in the generator mode, the descent into the bottom zone (60) of said weights, and, in motor mode, the ascent to the surface (50) of said weights;
a reversible motor (20) cooperates with the lift-generator (30) and allows, in the generator mode, the production of electric energy thanks to the action of the weights (40) during their descent, and, in motor mode, the actuating of the lift-generator (30) to perform a raising of the weights (40);
and each of the weights cooperates with at least one reservoir (41) adapted to substantially hermetically accommodate a given amount of air and/or water and a gripping means (44).

2. System for storing and generating electric energy for aquatic environment according to claim 1, wherein the reversible motor (20) is carried by the main float (10) and cooperates with the upper portion of the lift-generator (30).

3. System for storing and generating electric energy for aquatic environment according to one of claims 1 or 2, wherein the lift-generator (30) is constituted by a set of pulleys (31, 32) actuating a belt (33) between the main float (10) and the bottom (60).

4. System for storing and generating electric energy for aquatic environment according to claim 3, wherein the pulley assembly includes a surface pulley (31) carried by the main float (10) and a bottom pulley (32).

5. System for storing and generating electric energy for aquatic environment according to claim 4, wherein the surface pulley (31) mechanically cooperates with the reversible motor (20) through a transmission (21).

6. System for storing and generating electric energy for aquatic environment according to one of claims 1 or 2, wherein the lift-generator (30) is constituted by a winch (34) carried by the main float (10), a winch cable (35) and at least one hook (36).

7. System for storing and generating electric energy for aquatic environment according to claim 6, wherein the winch (34) mechanically cooperates with the reversible motor (20) through a transmission (21).

8. System for storing and generating electric energy for aquatic environment according to one of the preceding claims, wherein the weights (40) are of substantially elongated shape with the reservoir (41) arranged mainly towards one of the ends, with a float (46) cooperating with this same end.

9. System for storing and generating electric energy for aquatic environment according to one of the preceding claims, wherein each of the weights comprises a fluidic flow management control (42) of the quantity of air and water of the reservoir (41) in fluid cooperation with the interior of the tank and the outside of the weight.

10. Method for storing and generating electric energy for aquatic environment, comprising the steps of:
- in generator mode, ensuring the descent into the bottom zone (60) of a plurality of weights (40) with the aid of a lift-generator (30) connecting a main float (10) essentially at the surface (50) to a bottom zone (60), so that the force exerted by the weights (40) allows the lift-generator (30) to actuate a reversible motor (20) in electric energy production mode; and
- in motor mode, to raise said weights towards the surface (50), by means of the lift-generator (30), with the reversible motor (20) being then in motor mode and ensuring the motricity of the lift-generator (30).
